# EUROPÄISCHE PATENTSCHRIFT

(11) **EP 2 731 698 B1**
(45) Veröffentlichungstag und Bekanntmachung des Hinweises auf die Patenterteilung: **06.02.2019**
(21) Anmeldenummer: 12728245.7
(22) Anmeldetag: 14.06.2012
(51) Int. Cl.: F02M 35/10, F02M 35/024, B01D 46/24, B01D 46/52

(54) **FILTERELEMENT UND FILTEREINRICHTUNG**
FILTER ELEMENT AND FILTER DEVICE
ELÉMENT FILTRANT ET DISPOSITIF FILTRANT

(30) Priorität: 17.06.2011 DE 102011077715
(43) Veröffentlichungstag der Anmeldung: 21.05.2014
(73) Patentinhaber: Mahle International GmbH, 70376 Stuttgart (DE)
(72) Erfinder: BERISHA, Bashkim, 71229 Leonberg (DE); EILERS, Max, 70376 Stuttgart (DE); SCHIESZL, Andreas, 73479 Ellwangen (DE); VON MERKATZ, Hendrik, 71686 Remseck (DE)
(74) Vertreter: BRP Renaud & Partner mbB Rechtsanwälte Patentanwälte Steuerberater
(86) Internationale Anmeldenummer: PCT/EP2012/061357
(87) Internationale Veröffentlichungsnummer: WO 2012/172020

(56) Entgegenhaltungen:
- EP-A1- 1 743 687
- WO-A1-2011/048197
- DE-A1- 10 235 275
- DE-A1- 19 746 751
- DE-A1- 19 810 633
- DE-U1-202006 004 927
- DE-U1-202008 010 504
- KR-A- 20030 049 506
- US-A- 3 016 984

## Beschreibung

Die vorliegende Erfindung betrifft ein Filterelement für eine Filtereinrichtung zum Filtern eines Fluids, gemäß dem Oberbegriff des Anspruchs 1. Die Erfindung betrifft außerdem eine mit einem derartigen Filterelement ausgestattete Filtereinrichtung sowie eine mit einer solchen Filtereinrichtung ausgestattete Frischluftanlage einer Brennkraftmaschine.

Filterelemente bzw. Filtereinrichtungen können bspw. bei Kraftfahrzeugen verwendet werden, um Fluide zu filtern. Bspw. kann eine Frischluftanlage eine Luftfiltereinrichtung aufweisen, um Frischluft zu filtern, die einer Verbrennung in Brennräumen einer Brennkraftmaschine des Fahrzeugs zugeführt werden soll. Für den optimalen Betrieb der Brennkraftmaschine ist es von entscheidender Bedeutung, die den Brennräumen zugeführte Luftmenge oder Luftmasse möglichst genau zu kennen. Hierzu ist in der Frischluftanlage, zweckmäßig stromab der Filtereinrichtung ein Luftmassenmesser, also ein Sensor zum Messen der Luftmasse oder Luftmenge angeordnet. Dabei kann es im Hinblick auf eine kompakte Bauweise von Vorteil sein, diesen Luftmassenmesser möglichst nahe an der Filtereinrichtung bzw. möglichst nahe am Filterelement anzuordnen.

Ein herkömmliches Filterelement, das als Luftfilterelement verwendet werden kann, besitzt üblicherweise einen ringförmigen Filterkörper aus einem bahnenförmigen, gefalteten Filtermaterial, wobei der Filterkörper einen Innenraum in Umfangsrichtung umschließt. Herstellungsbedingt besitzt ein derartiger Filterkörper an der Stelle, an der in der Umfangsrichtung Endfalten des Filtermaterials aneinander grenzen und aneinander befestigt sind, eine Inhomogenität. Bspw. können die Endfalten miteinander verklebt sein und dementsprechend luftundurchlässig sein. Hierdurch ergibt sich insgesamt eine in der Umfangsrichtung inhomogene Durchströmung des Filterelements. Es hat sich gezeigt, dass sich die relative Drehlage des Filterelements in einem Filtergehäuse auf die Messwerte des Luftmassenmessers auswirkt, wenn dieser vergleichsweise nahe bzgl. des Filterelements positioniert ist. Folglich muss beim Einsetzen des Filterelements der Luftmassensensor kalibriert werden. Dieser Kalibriervorgang übersteigt hinsichtlich seiner Kosten üblicherweise den Materialwert des Filterelements.

Ein gattungsgemäßes Filterelement ist aus der KR 2003 0049506 A bekannt. Es besitzt einen ringförmigen Filterkörper aus einem bahnförmigen, gefalteten Filtermaterial, der einen Innenraum in Umfangsrichtung umschließt, eine erste Endscheibe und eine zweite Endscheibe, die den Filterkörper axial begrenzen. Ferner ist eine Innenzarge vorgesehen, die an einer dem Innenraum zugewandten Innenseite des Filterkörpers angeordnet ist, wobei die Innenzarge zumindest einen radial nach außen abstehenden, sich axial erstreckenden Ausrichtsteg aufweist.

Aus der DE 20 2006 004927 U1 ist ein Filterelement bekannt, das an der einen Endscheibe eine eine integral ausgeformte Ausströmtulpe aufweist.

Aus der DE 198 10 633 A1 ist ein Filterelement bekannt, an dessen Innenzarge ausströmseitig ein Diffusor integral ausgeformt ist.

Die vorliegende Erfindung beschäftigt sich mit dem Problem, für ein Filterelement der eingangs genannten Art bzw. für eine damit ausgestattete Filtereinrichtung eine verbesserte Ausführungsform anzugeben, die sich insbesondere dadurch auszeichnet, dass insbesondere ein Wechsel des Filterelements vergleichsweise preiswert realisierbar ist.

Dieses Problem wird bei der vorliegenden Erfindung insbesondere durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Filterelement mit einer Innenzarge auszustatten, die zumindest einen Ausrichtsteg aufweist, der zwischen zwei benachbarten Falten des Filtermaterials angeordnet ist. Dieser Ausrichtsteg wird bereits selbst als Ausrichtelement verwendet. Die Innenzarge kann wenigstens einen Teil einer ersten Endscheibe des Filterelements aufweisen, die zumindest ein separates Ausrichtelement besitzt. Durch die Anordnung eines Ausrichtstegs, insbesondere in Verbindung mit einem Ausrichtelement, an der Innenzarge kann besonders einfach eine vorbestimmte Drehlage des Filterelements bei der Montage in einem Gehäuse der zugehörigen Filtereinrichtung berücksichtigt werden. Insbesondere lässt sich nämlich der Ausrichtsteg während der Herstellung des Filterelements in stets der gleichen Relation zu den Endfalten des Filtermaterials positionieren. Insbesondere ist über die vorgegebene Relativlage zwischen Ausrichtsteg und Ausrichtelement die Position der Endfalten automatisch bestimmt. Hierdurch wird also die Möglichkeit geschaffen, die Filterelemente im Filtergehäuse stets mit der gleichen Positionierung der Endfalten zu montieren. Eine Beeinflussung der Messwerte des Luftmassenmessers wird dadurch reduziert. Insbesondere kann bei einem Filterelementwechsel eine erneute Kalibrierung des Luftmassenmessers entfallen. Die Innenzarge weist eine Strömungstulpe auf oder ist als Strömungstulpe ausgestaltet. Je nach Durchströmungsrichtung des Filterkörpers handelt es sich bei der Strömungstulpe dabei um eine Einströmtulpe oder um eine Ausströmtulpe. Die Strömungstulpe ist zweckmäßig im Bereich einer Endscheibe des Filterelements angeordnet und verbessert die Durchströmung der Endscheibe und kann insbesondere die Luftmassenmessung verbessern.

Bei besonderen Ausgestaltungen kann die Strömungstulpe über unterschiedlich hohe Bereiche verfügen, um das Strömungsverhalten zu beeinflussen. Weiterhin kann die Strömungstulpe über gebogene Bereiche verfügen, welche insbesondere zur Abstützung des Filterkörpers dienen können.

Bei vorteilhaften Ausgestaltungen bildet die Strömungstulpe einen Übergang zwischen einem kreisförmigen Querschnitt und einem ovalen Querschnitt. Durch die Strömungstulpe werden unerwünschte Verwirbelungen verhindert.

Beispielsweise kann der Filterkörper einen elliptischen Querschnitt besitzen, während die Strömungstulpe zumindest axial außen einen kreisförmigen Querschnitt aufweist. Hierdurch kann die Strömungstulpe axial stirnseitig an ein Anschlussrohr stoßen, das einen kreisförmigen Querschnitt besitzt. Mit dem im Querschnitt zylindrischen Filterkörper lässt sich dann eine vergrößerte Filtrationsfläche schaffen.

Erfindungsgemäß weist die Innenzarge zumindest einen Teil einer den Filterkörper axial begrenzenden Endscheibe auf, wobei die Strömungstulpe an dieser Endscheibe bzw. an diesem Teil der Endscheibe ausgeformt ist. Hierdurch erhöht sich der Integrationsgrad der Innenzarge, was die Herstellung des Filterelements vereinfacht.

Gemäß einer nicht erfindungsgemäßen Ausführungsform können die Endfalten aneinander befestigt sein. Bspw. können sie miteinander verklebt oder verschweißt oder verclipst sein. Der Ausrichtsteg greift dann in eine zwischen zwei benachbarten Falten ausgebildete Tasche ein. Bei der Herstellung des Elements ist dabei darauf zu achten, dass der Ausrichtsteg dabei stets in Bezug auf die aneinander befestigten Endfalten in die gleiche Tasche eingreift.

Erfindungsgemäß sind die Endfalten am Ausrichtsteg befestigt, bspw. durch Verkleben, Verschweißen oder Plastifizieren. Ebenso ist auch hier eine Verclipsung denkbar. Hierdurch ergibt sich die Ausrichtung der Endfalten bzgl. des Ausrichtstegs zwangsläufig, was Montagefehler reduziert.

Bei einer nicht erfindungsgemäßen Ausführungsform kann die Fixierung der Endfalten am Ausrichtsteg dadurch erfolgen, dass ein Clipelement radial außen angebracht wird, das die beiden Endfalten übergreift und in Umfangsrichtung gegen den Ausrichtsteg verpresst. Zusätzlich oder alternativ kann das Clipelement mit den Endfalten verklebt oder verschweißt sein. Das Clipelement erstreckt sich über die gesamte axiale Länge des Filterkörpers. Zweckmäßig kann bei einer anderen nicht erfindungsgemäßen Ausführungsform das Clipelement über den Filterkörper axial hinaus vorstehen, und zwar zumindest an einer Seite des Filterkörpers. Zweckmäßig steht das Clipelement soweit über den Filterkörper axial vor, dass das Clipelement auch nach dem Anbringen einer Endscheibe durch diese hindurch vorsteht, also axial von besagter Endscheibe absteht und dadurch bei dieser nicht erfindungsgemäßen Ausführungsform ein Ausrichtelement bildet. Beim Anspritzen der Endscheibe wird das Clipelement dabei ebenfalls umspritzt, um Leckagen des Clipelements zu vermeiden.

Ein gehäuseseitiges Gegenausrichtelement kann nun bei dieser nicht erfindungsgemäßen Ausführungsform axial mit dem Clipelement zusammenwirken, um die gewünschte Drehlagenausrichtung des Filterelements im Gehäuse zu bewirken.

Bei einer anderen nicht erfindungsgemäßen Ausführungsform, bei der es nicht erforderlich ist, das Clipelement axial über den Filterkörper hinaus zu verlängern, kann ein Gegenausrichtelement am Gehäuse so angeordnet sein, dass es radial mit dem Clipelement zum Ausrichten des Filterelements zusammenwirkt. Bei einer derartigen Ausführungsform mit radial wirkendem Gegenausrichtelement kann grundsätzlich auch auf ein Clipelement verzichtet werden. Erfindungsgemäß ist in diesem Fall vorgesehen, die Endfalten am Ausrichtsteg zu fixieren. Das Ausrichtelement ist in diesem Fall erfindungsgemäß durch den Ausrichtsteg und die daran angebrachten Endfalten selbst gebildet. Das Gegenausrichtelement kann dann wieder radial mit diesem Ausrichtelement zum Ausrichten des Filterelements zusammenwirken.

Bei einer anderen vorteilhaften Ausführungsform kann die Innenzarge zumindest eine Lochscheibe aufweisen, die sich senkrecht zur Längsmittelachse des Filterelements erstreckt. Eine derartige Lochscheibe kann die Durchströmung des Filterelements homogenisieren, was insbesondere dann von Vorteil ist, wenn ein Luftmassensensor vergleichsweise nahe am reinseitigen Auslass des Filterelements positioniert ist. Die Lochscheibe ist dabei zweckmäßig axial zwischen der ersten Endscheibe und einer zweiten Endscheibe des Filterelements positioniert. Dabei kann die Lochscheibe grundsätzlich näher an derjenigen Endscheibe positioniert sein, die den reinseitigen Auslass bildet. Da die erste Endscheibe mit einem Ausrichtelement ausgestattet werden kann, kann die erste Endscheibe vorzugsweise als geschlossene Endscheibe konzipiert sein. Vorteilhaft ist daher die zweite Endscheibe als zentral offene Endscheibe konfiguriert, die den reinseitigen Auslass bildet. Dementsprechend ist die Lochscheibe zweckmäßig näher an der zweiten Endscheibe positioniert.

Vorteilhaft kann vorgesehen sein, dass die Innenzarge als integralen Bestandteil zumindest einen Teil einer den Filterkörper axial begrenzenden ersten Endscheibe aufweist, wobei dieser Teil das vorstehend genannte Ausrichtelement aufweisen kann. Erfindungsgemäß weist die Innenzarge als integralen Bestandteil zumindest einen Teil einer den Filterkörper axial begrenzenden zweiten Endscheibe auf, wobei dieser Teil die Strömungstulpe bildet oder aufweist.

Zweckmäßig kann die Innenzarge zumindest einen sich axial erstreckenden Stützsteg aufweisen, der die erste Endscheibe an einer zweiten Endscheibe axial abstützt. Hierdurch kann der Filterkörper bzw. das Filterelement signifikant ausgesteift und stabilisiert werden.

Bei einer weiteren vorteilhaften Ausführungsform kann das wenigstens eine an der ersten Endscheibe ausgebildete Ausrichtelement als Bestandteil einer Clipsverbindung ausgestaltet sein. Ein Gegenstück zu dieser Clipsverbindung ist dann zweckmäßig am Filtergehäuse ausgebildet. Auf diese Weise kann sichergestellt werden, dass nur für den Fall, dass die Verclipsung ordnungsgemäß stattfindet, die gewünschte Ausrichtung des Filterelements vorliegt. Insbesondere kann das wenigstens eine Ausrichtelement an der ersten Endscheibe exzentrisch, also beabstandet zur Längsmittelachse des Filterkörpers angeordnet sein. Hierdurch vereinfacht sich eine eindeutige Drehlagenausrichtung.

Bei einer anderen vorteilhaften Ausführungsform kann die Innenzarge integral mit dem zugehörigen Teil der ersten Endscheibe und dem Ausrichtsteg spritzgeformt sein. Zweckmäßig ist auch das wenigstens eine Ausrichtelement integral an dem jeweiligen Teil der ersten Endscheibe ausgeformt. Hierdurch ist stets eine vorgegebene, definierte Relativlage zwischen Ausrichtsteg und erster Endscheibe bzw. Ausrichtelement gegeben, wodurch Montagefehler und Montagetoleranzen vermieden werden können. Darüber hinaus kann die Innenzarge auch mit der zuvor genannten Lochscheibe und/oder mit dem wenigstens einen zuvor genannten Stützsteg und/oder mit der zuvor genannten Strömungstulpe integral hergestellt sein. Hierdurch erhält die Innenzarge eine hohe Funktionalität und Komplexität, wodurch die Herstellung des Filterelements trotz der vergleichsweise großen Anzahl an integrierter Funktionselemente preiswert ist.

Zweckmäßig kann die Innenzarge in einer die Längsmittelachse enthaltenden Axialebene in zwei Innenzargenhälften geteilt sein. Durch die Teilung der Innenzarge können die Spritzformwerkzeuge zur Herstellung der Innenzarge bzw. zur Herstellung der Innenzargenhälften vereinfacht werden, was die Herstellung der Innenzarge und somit des Filterelements preiswerter gestaltet.

Gemäß einer vorteilhaften Weiterbildung kann vorgesehen sein, dass die beiden Innenzargenhälften durch ein Filmscharnier miteinander verbunden sind, das eine parallel zur Längsmittelachse verlaufende Schwenkachse definiert. Somit wird trotz der Teilung in der Axialebene eine einstückige, integrale Spritzformung der Innenzarge realisiert. Zweckmäßig können die Innenzargenhälften mit wenigstens einer Verrastung integral ausgestattet sein, die nach dem Spritzformen und nach dem Verschwenken der beiden Innenzargenhälften um die durch das Filmscharnier definierte Schwenkachse die beiden Innenzargenhälften aneinander verrastet, sobald die Innenzarge ihre zylindrische Form zum Anordnen des Filterkörpers aufweist.

Bei einer anderen Weiterbildung kann die eine Innenzargenhälfte integral mit dem zugehörigen Teil der ersten Endscheibe spritzgeformt sein, während die andere Innenzargenhälfte integral mit der Lochscheibe spritzgeformt ist.

Bei einer weiteren vorteilhaften Ausführungsform kann die erste Endscheibe einen den Filterkörper axial verschließenden Ringbereich und einen vom Ringbereich umschlossenen, geschlossenen zentralen Kernbereich aufweisen. Dieser Kernbereich ist durch den der ersten Endscheibe zugeordneten Teil der Innenzarge gebildet, während der Ringbereich an den Kernbereich angespritzt oder angeschäumt ist. Hierdurch ist es möglich, den Filterkörper an der Innenzarge anzuordnen und durch das Anbringen des Ringbereichs axial zu versiegeln bzw. abzudichten und dabei gleichzeitig an der Innenzarge zu fixieren.

Bei einer weiteren Ausführungsform kann eine zweite Endscheibe einen den Filterkörper axial verschließenden Ringbereich und einen vom Ringbereich umschlossenen offenen zentralen Kernbereich aufweisen. Der Kernbereich ist durch die Strömungstulpe der Innenzarge gebildet, während der Ringbereich an den Kernbereich angespritzt oder angeschäumt ist. Hier ergibt sich der gleiche Vorteil, wonach der an der Innenzarge angeordnete Filterkörper durch das Anbringen des Ringbereichs axial versiegelt und an der Innenzarge fixiert wird.

Bei einer besonders vorteilhaften Ausführungsform kann vorgesehen sein, dass bei der Endscheibe, deren offener zentraler Kernbereich die Strömungstulpe bildet oder aufweist, der angespritzte oder angeschäumte Ringbereich eine radial wirkende Dichtkontur aufweist, in die ein Anschlussstutzen der Filtereinrichtung derart axial einsteckbar ist, dass der Anschlussstutzen axial an die Strömungstulpe stößt, wobei die Dichtkontur die Strömungstulpe axial überlappt und radial am Anschlussstutzen anliegt. Hierdurch wird ein dichter Übergang zwischen dem Anschlussstutzen und der Strömungstulpe realisiert. Die Dichtkontur ist dabei zweckmäßig mit dem Ringbereich an die Strömungstulpe angespritzt oder angeschäumt.

Eine erfindungsgemäße Filtereinrichtung umfasst ein Filtergehäuse sowie ein Filterelement der vorstehend beschriebenen Art. Das Filterelement trennt im Filtergehäuse eine Rohseite von einer Reinseite. Das Filtergehäuse besitzt zumindest ein radial wirkendes Gegenausrichtelement, das so ausgestaltet und positioniert ist, dass es beim Einsetzen des Filterelements mit dem wenigstens einen Ausrichtelement des Filterelements zum Ausrichten des Filterelements in eine vorbestimmte Drehlage zusammenwirkt. Auf diese Weise wird beim Einsetzen des Filterelements zwangsläufig die vorbestimmte Drehlage eingestellt, sodass fehlerhafte Montagen weitgehend vermieden werden können. Das Filtergehäuse der Filtereinrichtung kann insbesondere den vorstehend genannten Anschlussstutzen aufweisen.

Eine erfindungsgemäße Frischluftanlage umfasst eine Filtereinrichtung der vorstehend beschriebenen Art sowie einen Luftmassensensor, der in einen Luftströmungspfad stromab des Filterelements eingebaut ist. Insbesondere kann der Luftmassensensor am Filtergehäuse montiert sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, prinzipielle Schnittdarstellung einer Frischluftanlage einer Brennkraftmaschine im Bereich einer Filtereinrichtung,
- Fig. 2: ein Querschnitt durch ein Filterelement,
- Fig. 3: eine vergrößerte Detailansicht des Querschnitts aus Fig. 2 im Bereich eines Ausrichtstegs,
- Fig. 4: eine isometrische Ansicht eines Filterelements bei einer anderen Ausführungsform bei weggelassenem Filterkörper,
- Fig. 5: ein Querschnitt durch eine Filtereinrichtung mit Filterelement bei einer weiteren Ausführungsform,
- Fig. 6: ein vergrößertes Detail des Querschnitts aus Fig. 5,
- Fig. 7: ein Detail wie in Fig. 6, jedoch bei einer anderen Ausführungsform,
- Fig. 8: ein Längsschnitt der Filtereinrichtung im Bereich einer axialen Stirnseite entsprechend Schnittlinien VIII in Fig. 9,
- Fig. 9: eine vereinfachte, teilweise geschnittene Seitenansicht der Filtereinrichtung aus Fig. 8 entsprechend Schnittlinien IX in Fig. 8,
- Fig. 10: eine Seitenansicht des Bereichs aus Fig. 8, jedoch in entgegengesetzter Blickrichtung,
- Fig. 11: ein Querschnitt der Filtereinrichtung entsprechend Schnittlinien XI in Fig. 10,
- Fig. 12: ein vergrößertes Detail des Querschnitts aus Fig. 11,
- Fig. 13: das Detail aus Fig. 12 in einer Blickrichtung XIII in Fig. 12,
- Fig. 14: eine Axialansicht einer Innenzarge des Filterelements bei einer zweigliedrigen Ausführungsform im aufgeklappten Zustand,
- Fig. 15: eine isometrische Ansicht der zweigliedrigen Innenzarge im aufgeklappten Zustand,
- Fig.16: eine weitere isometrische Ansicht der zweigliedrigen Innenzarge in einem zusammengeklappten Zustand
- Fig. 17: eine Frischlufteinrichtung im Schnitt.

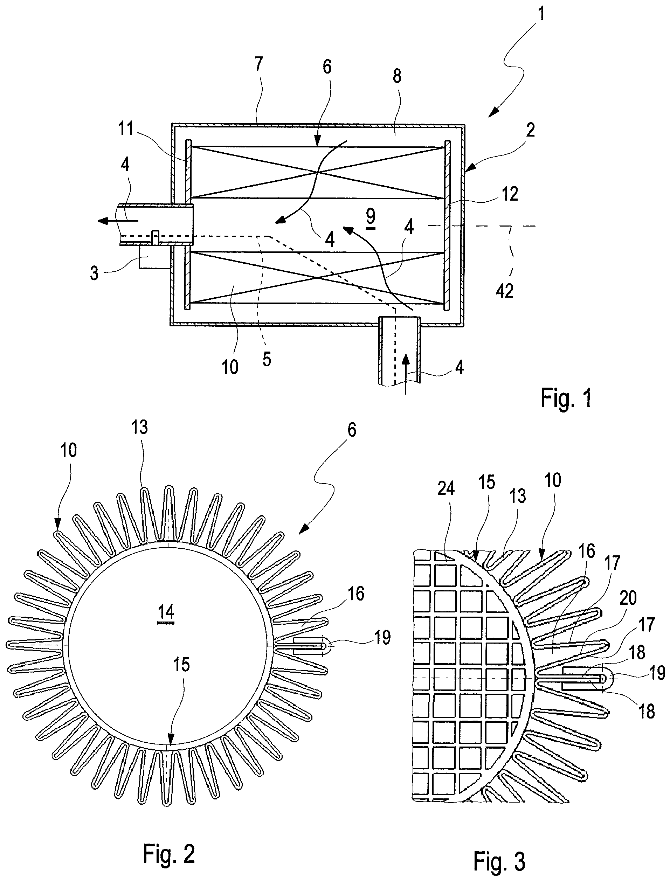

Entsprechend Fig. 1 umfasst eine nur teilweise dargestellte Frischluftanlage 1, die zur Versorgung einer Brennkraftmaschine mit Frischluft dient, eine Filtereinrichtung 2 sowie einen Luftmassenmesser 3, der bzgl. einer durch Pfeile angedeuteten Luftströmung 4 in einem mit unterbrochener Linie angedeuteten Luftströmungspfad 5 stromab eines Filterelements 6 angeordnet ist, das in einem Gehäuse 7 der Filtereinrichtung 2 eine Rohseite 8 von einer Reinseite 9 trennt. Das Filterelement 6 besitzt hierzu einen Filterkörper 10 und zwei Endscheiben 11,12, die den Filterkörper 10 axial begrenzen. Das ringförmige oder zylindrische Filterelement 6 besitzt eine Längsmittelachse 42, die eine Axialrichtung definiert.

Wie sich insbesondere den Figuren 2 und 3 entnehmen lässt, ist der Filterkörper 10 kreisringförmig gestaltet und aus einem bahnförmigen, gefalteten Filtermaterial 13 hergestellt. Der Filterkörper 10 umhüllt in der Umfangsrichtung einen kreiszylindrischen Innenraum 14, der bei der Durchströmung gemäß Fig. 1 die Reinseite 9 bildet. Das Filterelement 6 ist außerdem mit einer Innenzarge 15 ausgestattet, die an einer dem Innenraum 14 zugewandten Innenseite des Filterkörpers 10 angeordnet ist.

Die Innenzarge 15 weist zumindest einen radial nach außen abstehenden Ausrichtsteg 16 auf, der sich axial erstreckt, und zwar vorzugsweise über die gesamte axiale Länge oder Höhe des Filterkörpers 10. Gemäß Fig. 3 greift der Ausrichtsteg 16 radial zwischen zwei in der Umfangsrichtung benachbarte Falten 17 des gefalteten Filtermaterials 13 ein und kommt an diesen Falten 17 zur Anlage.

Im Beispiel der Figuren 2 und 3 (nicht gemäß der Erfindung) sind zwei in der Umfangsrichtung aneinander grenzende Endfalten 18 des Bahnenmaterials 13 aneinander befestigt, und zwar mittels eines Clipelements 19. In den Figuren 2 und 3 ist der Ausrichtsteg 16 in eine Tasche 20 eingesteckt, die von zwei "normalen" Falten 17, also nicht von den Endfalten 18 gebildet ist und radial nach innen offen ist. Gemäß Fig. 3 kann der Ausrichtsteg 16 im Profil komplementär zum Innenraum der Tasche 20 geformt sein.

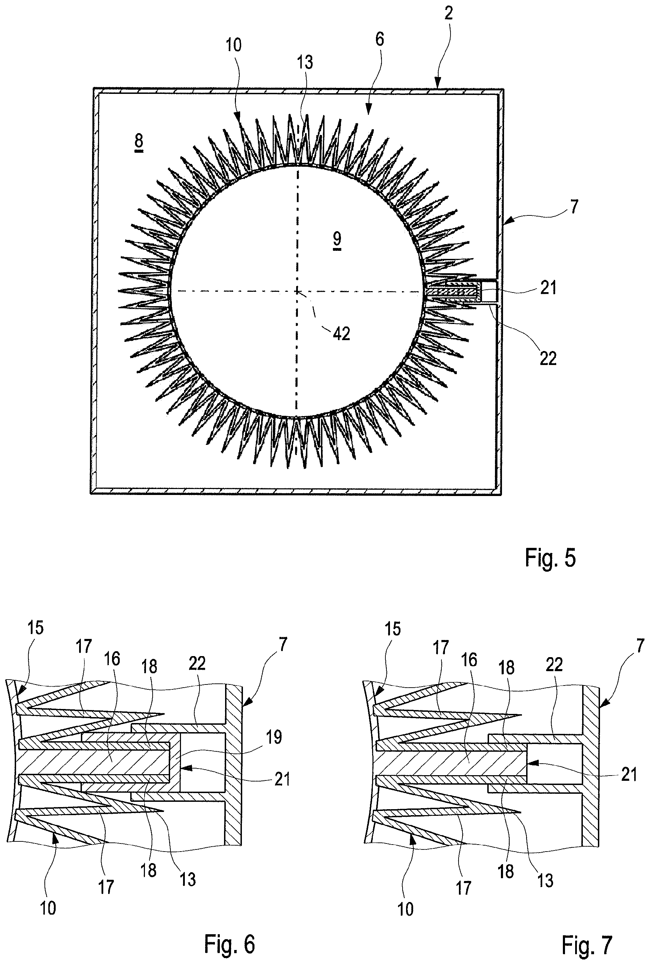

Alternativ dazu zeigen die Figuren 5 bis 13 Ausführungsformen, bei denen die Endfalten 18 am Ausrichtsteg 16 angeordnet und daran befestigt sind. Die Endfalten 18 können am Ausrichtsteg 16 mittels eines derartigen Clipelements 19 befestigt werden (nicht gemäß der Erfindung). Bspw. verpresst das Clipelement 19 die Endfalten 18 mit dem Ausrichtsteg 16. Das Clipelement 19 wird hierzu radial von außen auf die Endfalten 18 und den Ausrichtsteg 16 aufgepresst. Das Clipelement 19 kann nun als radial am Filterkörper 10 angeordnetes Ausrichtelement verwendet werden. Ein derartiges Ausrichtelement wird im Folgenden mit 21 bezeichnet.

Gemäß der in den Figuren 5 und 6 gezeigten Ausführungsform kann die Filtereinrichtung 2 am Gehäuse 7 ein zum Ausrichtelement 21 passendes Gegenausrichtelement 22 aufweisen, das radial mit dem Ausrichtelement 21 zusammenwirkt, um die Drehlage des Filterelements 6 auszurichten. In der Folge befindet sich der Ausrichtsteg 16 und befinden sich die Endfalten 18 stets in der gleichen Relativlage bzgl. des Gehäuses 7. Bspw. ist das Gegenausrichtelement 22 als radial nach innen offenes U-Profil ausgebildet, das von einer Seitenwand des Gehäuses 7 nach innen absteht.

Bei einer in Fig. 7 gezeigten Ausführungsform kann auf das Clipelement 19 verzichtet werden. In diesem Fall werden die Endfalten 18 dicht mit dem Ausrichtsteg 16 verbunden. Bspw. können die Endfalten 18 mit dem Ausrichtsteg 16 verklebt oder verschweißt oder damit plastifiziert werden. In diesem Fall kann der Ausrichtsteg 16 zusammen mit den daran angebrachten Endfalten 18 direkt das radial wirkende Ausrichtelement 21 bilden, das mit dem Gegenausrichtelement 22 des Gehäuses 7 radial zusammenwirkt.

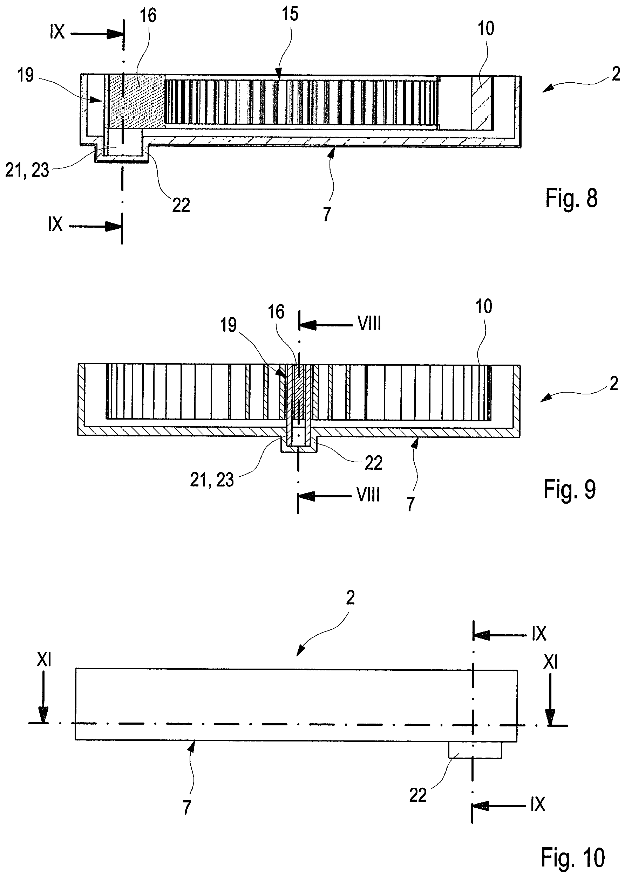

In den Figuren 8 bis 13 ist das Clipelement 19 axial zumindest an einem Ende über den Filterkörper 10 vorstehend ausgestaltet (nicht gemäß der Erfindung). Ein axial über den Filterkörper 10 vorstehende Ende des Clipelements 19 ist dabei mit 23 bezeichnet. Dieses vorstehende Clipselementende 23 kann als Ausrichtelement 21 verwendet werden, das in diesem Fall axial orientiert ist. Am Gehäuse 7 der Filtereinrichtung 2 ist dann ein dazu komplementäres Gegenausrichtelement 22 vorgesehen, das axial mit dem Ausrichtelement 21, also hier mit dem vorstehenden Ende 23 des Clipelements 19 zusammenwirkt. Bspw. ist das Gegenausrichtelement 22 hier als axiale Vertiefung in einen stirnseitigen Wandabschnitt des Gehäuses 7 ausgebildet.

Zweckmäßig kann das Clipelement 19 beim Anbringen der Endscheiben 11,12, die vorzugsweise an den Filterkörper 10 angeschäumt oder angespritzt oder damit plastifiziert werden, ebenfalls vom Werkstoff der Endscheiben umschlossen werden. Dabei kann die dem vorstehenden Ende 23 des Clipelements 19 zugeordnete Endscheibe 11,12 vom Clipelement 19 axial durchsetzt sein, sodass das vorstehende Ende 23 nach dem Anbringen der jeweiligen Endscheibe 11,12 axial von besagter Endscheibe 11,12 absteht.

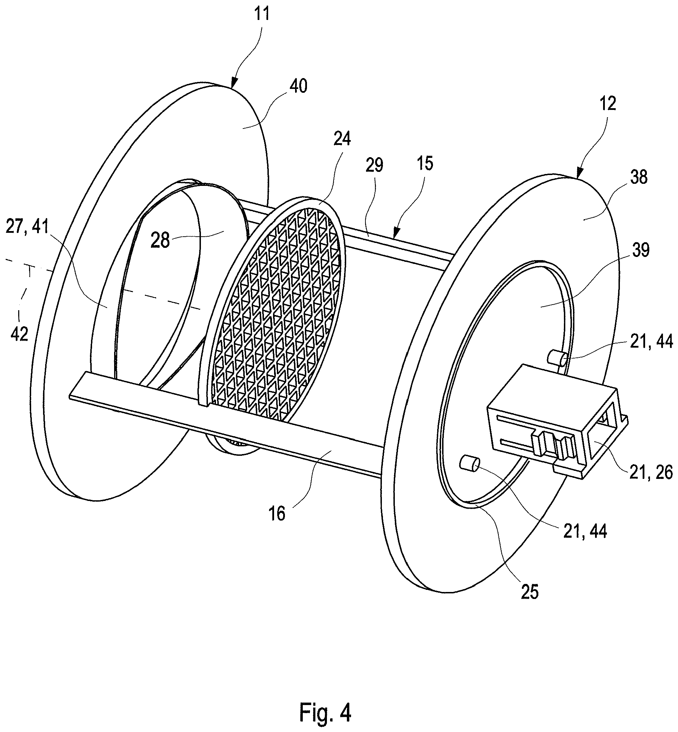

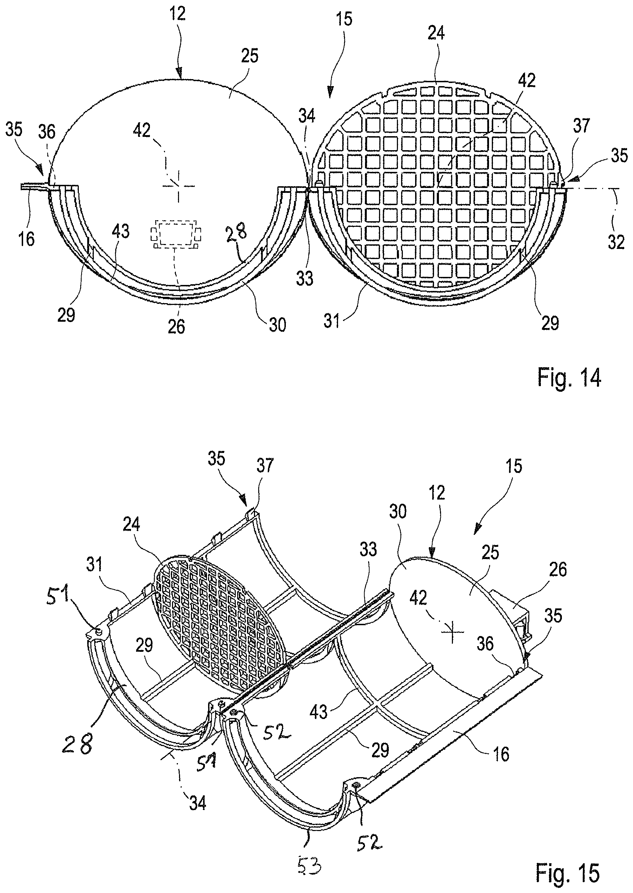

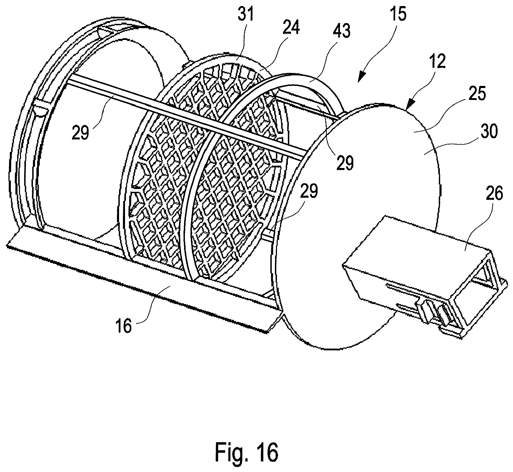

Gemäß den Figuren 3, 4 und 14 bis 16 kann die Innenzarge 15 außerdem eine Lochscheibe 24 aufweisen. Die Lochscheibe 24 erstreckt sich dabei senkrecht zur Längsmittelachse 42 des Filterelements 6 und dient zur Glättung der Luftströmung 4. Dabei ist die Lochscheibe 24 zwischen den beiden Endscheiben 11,12 positioniert. Zweckmäßig ist die Lochscheibe 24 dabei näher an derjenigen Endscheibe 11,12 angeordnet, durch welche die Luftströmung 4 in Richtung Heißfilmmesser 3 austritt. An der Lochscheibe 24 kann sich der Filterkörper 10 radial innen abstützten, so dass die Lochscheibe 24 als Stützring der Innenzarge 15 dient. Die Lochscheibe 24 kann dabei gemäß Fig. 4 der einzige Stützring der Innenzarge 15 sein. Ebenso kann die Innenzarge 15 gemäß den Fig. 14 bis 16 zumindest einen weiteren Stützring 43 aufweisen. Die Lochscheibe 24 gemäß der Figur 3 ist kreisförmig ausgebildet. Bei den Ausgestaltungen gemäß den Figuren 4 und 14 bis 17 ist die Lochscheibe 24 oval ausgeführt. Der sich an der ovalen Lochscheibe 24 abstützende Filterkörper 10 bildet somit einen ovalzylindrischen Innenraum.

Gemäß den Figuren 4 und 14 bis 16 kann die Innenzarge 15 zumindest einen Teil einer der Endscheiben 11,12 aufweisen. Im Beispiel handelt es sich hierbei um die Endscheibe 12, die im Folgenden als erste Endscheibe 12 bezeichnet wird. Grundsätzlich ist es möglich, an diesem Teil 25 der ersten Endscheibe 12 zumindest ein Ausrichtelement 21 anzuordnen. Im Beispiel der Fig. 4 sind rein exemplarisch drei derartige Ausrichtelemente 21 angeordnet. Diese können wahlweise oder kumulativ vorgesehen sein. Sofern die Ausrichtung gemäß den Varianten der Figuren 5 bis 13 mit Hilfe des durch den Clip 19 oder des mit dem Ausrichtsteg 16 gebildeten Ausrichtelements 21 erfolgt, kann auf die in Fig. 4 gezeigten, am Teil 25 der ersten Endscheibe 12 ausgebildeten Ausrichtelemente 21 verzichtet werden.

Die in Fig. 4 gezeigten Ausrichtelemente 21 können als einfache, axial abstehende Pins 44 und/oder als Clipelement 26 konzipiert sein (nicht gemäß der Erfindung), das mit einem hier nicht gezeigten, dazu komplementären Gegenclipelement zusammenwirkt, das am Gehäuse 7 der Filtereinrichtung 2 ausgebildet ist. Durch die Fixierung bzw. Verclipsung des Filterelements 6 im Filtergehäuse 7 erfolgt dann zwangsläufig die gewünschte Drehlagenausrichtung.

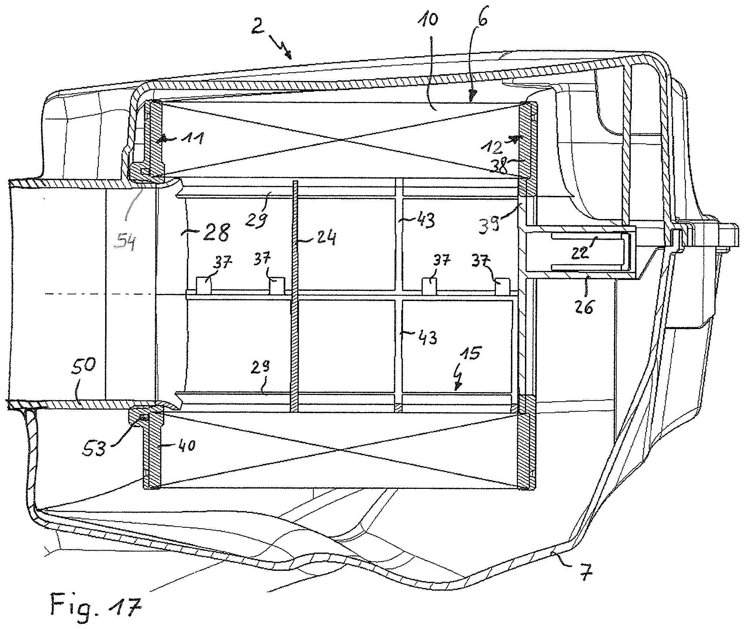

Bei der in Fig. 4 gezeigten Ausführungsform weist die Innenzarge 15 außerdem zumindest einen Teil 27 der anderen Endscheibe 11 auf. Hierbei handelt es sich um die Endscheibe 11, die im Folgenden als zweite Endscheibe 11 bezeichnet wird. Dieses Teil 27 der zweiten Endscheibe 11 bildet dabei eine Strömungstulpe 28 oder weist eine derartige Strömungstulpe 28 auf. Im Beispiel dient die Strömungstulpe 28 als Ausströmtulpe. Die Strömungsstulpe 28 verfügt über einen kreisförmigen Querschnitt, während die Endscheibe 11 oval ausgeführt ist. Weiterhin ragt die kreisförmige Strömungstulpe 28 axial in den oval ausgeführten Innenraum des Filterelements 6 hinein. Hierbei verfügt die Strömungstulpe 28 über Bereiche unterschiedlicher axialer Höhen. Im Bereich der kurzen Achse der ovalen Endscheibe 11 ist die axiale Höhe der Strömungstulpe 28 geringer ausgeführt, als im Bereich der längeren Achse. Somit wird ein verbessertes Strömungsverhalten der gereinigten Luft aus dem Innenraum in den Anschlussstutzen 50 gemäß Figur 17 erreicht. Wie insbesondere den Figuren 15 und 17 zu entnehmen ist, ist die Strömungstulpe 28 nach gebogen ausgeführt. Hierbei verläuft die Biegung derart, dass die Strömungstulpe 28 am axial nach innen ragenden Ende über einen größeren Durchmesser verfügt, als an dem endscheibennahen Bereich. Dadurch wird das Einströmen der Luft in den Strömungstulpenbereich verbessert. Der endscheibennahe Bereich der Strömungstulpe 28 verfügt über ca. den gleichen Innendurchmesser, wie der angrenzende Anschlussstutzen 50. Somit wird die Luft ohne weitere Verwirbelungen weitergeleitet.

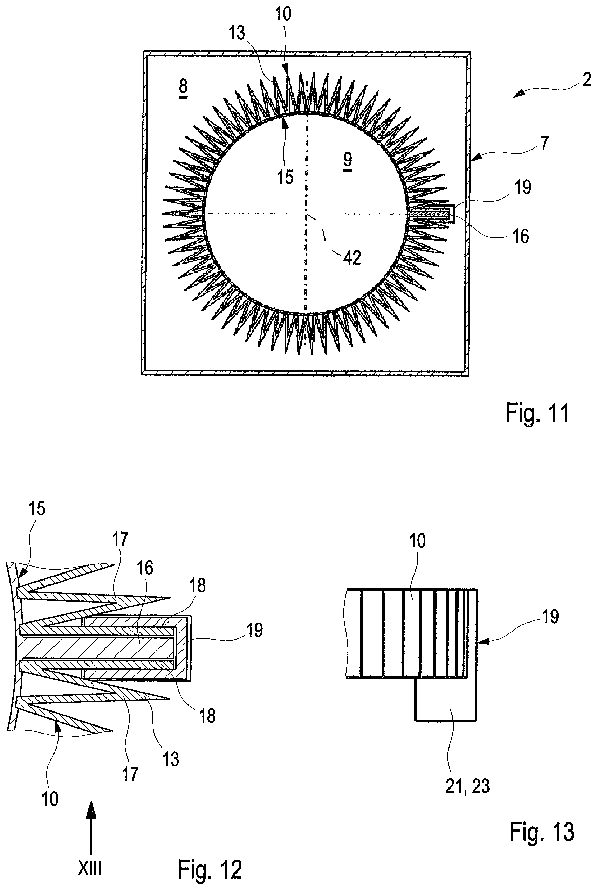

Gemäß Fig. 4 ist die Innenzarge 15 außerdem mit wenigstens einem Stützsteg 29 ausgestattet, der sich axial erstreckt, also parallel zur Längsmittelachse 42 des Filterelements 6 und der die beiden Endscheiben 11,12 axial aneinander abstützt. Bei den Ausführungsformen der Figuren 2 und 4 ist jeweils nur ein einziger derartiger Stützsteg 29 vorgesehen. Die Ausführungsformen der Figuren 5 und 11 zeigen keinen Stützsteg 29. Bei der in den Figuren 14 bis 16 gezeigten Ausführungsform sind mehrere Stützstege 29 vorgesehen. Die Stützstege 29 dringen in die Strömungstulpe 28 ein und werden so radial abgestützt. Weiterhin stützt die Strömungstulpe 28 den Filterkörper 10 radial ab. Hierbei bildet der gebogene Rand der Strömungstulpe 28 in der axial längeren Richtung der ovalen Endscheibe 11 ebenfalls ein oval aus, an dem sich die ovale Innenkontur des Filterkörpers 10 abstützt.

Zweckmäßig ist die Innenzarge 15 mit dem Ausrichtsteg 16 integral spritzgeformt. Darüber hinaus kann die Innenzarge 15 als weiteren integralen Bestandteil den Teil 25 der ersten Endscheibe 12 und/oder die Lochscheibe 24 und/oder den wenigstens einen Stützsteg 29 und/oder den Teil 27 der zweiten Endscheibe 11 mit der Strömungstulpe 28 umfassen.

Bei der in den Figuren 14 bis 16 gezeigten Ausführungsform ist die Innenzarge 15 in zwei Innenzargenhälften 30,31 geteilt, und zwar in einer Axialebene 32, welche die Längsmittelachse 42 des Filterelements 6 enthält. Gemäß der hier vorgestellten bevorzugten Ausführungsform sind die beiden Innenzargenhälften 30,31 durch ein Filmscharnier 33 miteinander verbunden. Das Filmscharnier 33 definiert dabei eine Schwenkachse 34, die sich parallel zur Längsmittelachse 42 erstreckt. An den Innenzargenhälften 30,31 kann eine Verrastung 35 ausgebildet sein, die bspw. an der einen Innenzargenhälfte 30 zumindest eine Rastöffnung 36 und an der anderen Innenzargenhälfte 31 zumindest einen Rasthaken 37 umfasst. Im zusammengeklappten Zustand durchsetzen die Rasthaken 37 dann die Rastöffnungen 36 und bilden die formschlüssige Verrastung 35 der beiden Innenzargenhälften 30,31 im zusammengeklappten Zustand. Zur exakten Positionierung der Innenzargenhälften 30, 31 sind Ausrichtungspins 51 vorgesehen, welche in Ausrichtungsaufnahmen 52 eingreifen. Somit wird eine exakte Kreisform der inneren Strömungstulpe 28 erzeugt. Zur Stabilisierung, insbesondere eines Ringbereiches 40, ist ein Stabilisierungsring 53 vorgesehen.

Im hier gezeigten Beispiel ist die eine Innenzargenhälfte 30 mit dem Teil 25 der ersten Endscheibe 12 und insbesondere auch mit dem Clipselement 26 integral geformt. Die andere Innenzargenhälfte 31 ist mit der Lochscheibe 24 integral spritzgeformt.

Gemäß Fig. 4 besitzt die erste Endscheibe 12 einen den hier nicht gezeigten Filterkörper 10 axial verschließenden Ringbereich 38 und einen vom Ringbereich 38 umschlossenen, geschlossenen zentralen Kernbereich 39. Der Kernbereich 39 ist durch den Teil 25 der ersten Endscheibe 12 gebildet, der hier an der Innenzarge 15 ausgeformt ist. Der Ringbereich 38 ist an diesen Kernbereich 39, also an den Teil 25 der Innenzarge 15 angespritzt oder angeschäumt. Die zweite Endscheibe 11 besitzt einen den nicht gezeigten Filterkörper 10 axial verschließenden Ringbereich 40 und einen vom Ringbereich 40 umschlossenen, offenen zentralen Kernbereich 41. Der Kernbereich 41 ist hier durch den Teil 27 der zweiten Endscheibe 11 gebildet, der an der Innenzarge 15 ausgebildet ist und im vorliegenden Fall die Strömungstulpe 28 bildet. Der Ringbereich 40 ist an diesen Kernbereich 41, also den Teil 27 der Innenzarge 14 angespritzt oder angeschäumt.

In Fig. 17 ist eine Frischlufteinrichtung 2 im Schnitt dargestellt. Diese Frischlufteinrichtung 2 enthält ein Filterelement 6 mit einer Innenzarge 15 gemäß den Fig. 14 bis 16. Die Frischlufteinrichtung 2 besitzt ein Gehäuse 7, das den Anschlussstutzen 50 aufweist. Weiterhin verfügt das Filterelement 6 über einen Filterkörper 10 und zwei Endscheiben 11, 12. Gleiche Bauteile sind mit gleichen Bezugszeichen versehen. Der Stabilisierungsring 53 ist von dem Material des Ringbereiches 40 umschlossen. Somit ist eine zuverlässige radiale Abdichtung des Ringbereiches 40 auf dem Anschlussstutzen 50 sicher gestellt. Im Beispiel der Fig. 17 weist der angespritzte Ringbereich 40 zur Realisierung der radialen Abdichtung gegenüber dem Anschlussstutzen 50 eine Dichtungskontur 54 auf. Die Dichtungskontur 54 überlappt dabei die Strömungstulpe 28 an einer radial außen liegenden Seite in der Axialrichtung. Hierdurch kann das Filterelement 6 so in das Gehäuse 7 eingesetzt werden, dass dabei der Anschlussstutzen 50 koaxial in die zweite Endscheibe 11 und somit koaxial in die Dichtkontur 54 einsetzbar ist, und zwar so weit, bis der Anschlussstutzen 50 und die Strömungstulpe 28 axial stirnseitig aneinander stoßen.

## Patentansprüche

1. Filterelement für eine Filtereinrichtung (2) zum Filtern eines Fluids,
- mit einem ringförmigen Filterkörper (10) aus einem bahnförmigen, gefalteten Filtermaterial (13), der einen Innenraum (14) in Umfangsrichtung umschließt,
- mit einer ersten Endscheibe (12) und mit einer zweiten Endscheibe (11), die den Filterkörper (10) axial begrenzen,
- mit einer Innenzarge (15), die an einer dem Innenraum (14) zugewandten Innenseite des Filterkörpers (10) angeordnet ist,
- wobei die Innenzarge (15) zumindest einen radial nach außen abstehenden, sich axial erstreckenden Ausrichtsteg (16) aufweist,
- wobei der Ausrichtsteg (16) in der Umfangsrichtung zwischen zwei benachbarten Falten (18) des Filtermaterials (13) angeordnet ist und daran anliegt,
**dadurch gekennzeichnet,**
- **dass** die Innenzarge (15) eine Strömungstulpe (28) aufweist oder als Strömungstulpe (28) ausgestaltet ist, wobei die Strömungstulpe (28) als Einströmtulpe oder als Ausströmtulpe ausgestaltet ist,
- **dass** die Innenzarge (15) zumindest einen Teil (27) der zweiten Endscheibe (11) aufweist, der die Strömungstulpe (28) aufweist oder als die Strömungstulpe (28) ausgestaltet ist,
- **dass** die Innenzarge (15) integral mit dem Ausrichtsteg (16), mit dem Teil (27) der zweiten Endscheibe (11) und mit der Strömungstulpe (28) spritzgeformt ist,
- **dass** Endfalten (18) des Filtermaterials (13) am Ausrichtsteg (16) befestigt sind,
- **dass** der Ausrichtsteg (16) mit den daran befestigten Endfalten (18) ein Ausrichtelement (21), um die Drehlage des Filterelements (6) in dem Filtergehäuse auszurichten, bildet.

2. Filterelement nach Anspruch 1,
**dadurch gekennzeichnet,**
**dass** die Strömungstulpe (28) einen Übergang zwischen einem kreisförmigen Querschnitt und einem ovalen Querschnitt bildet.

3. Filterelement nach Anspruch 1 oder 2,
**dadurch gekennzeichnet,**
**dass** der Filterkörper (10) einen elliptischen Querschnitt besitzt, während die Strömungstulpe (28) axial außen einen kreisförmigen Querschnitt aufweist.

4. Filterelement nach einem der Ansprüche 1 bis 3,
**dadurch gekennzeichnet,**
**dass** die Innenzarge (15) zumindest einen Teil (25) der den Filterkörper (10) axial begrenzenden ersten Endscheibe (12) aufweist.

5. Filterelement nach einem der Ansprüche 1 bis 4,
**dadurch gekennzeichnet,**
**dass** die Innenzarge (15) zumindest einen sich axial erstreckenden Stützsteg (29) aufweist, der die erste Endscheibe (12) an der zweiten Endscheibe (11) axial abstützt.

6. Filterelement nach einem der Ansprüche 1 bis 5,
**dadurch gekennzeichnet,**
**dass** die Innenzarge (15) zumindest eine Lochscheibe (24) aufweist, die sich senkrecht zur Längsmittelachse (42) des Filterelements (6) erstreckt.

7. Filterelement nach einem der Ansprüche 1 bis 6, **dadurch gekennzeichnet,**
**dass** die Innenzarge (15) außerdem integral mit dem Teil (25) der ersten Endscheibe (12) und/oder mit der Lochscheibe (24) und/oder mit dem wenigstens einen Stützsteg (29) spritzgeformt ist.

8. Filterelement nach einem der Ansprüche 1 bis 7, **dadurch gekennzeichnet,**
**dass** die Innenzarge (15) in einer die Längsmittelachse (42) enthaltenden Axialebene (32) in zwei Innenzargenhälften (30,31) geteilt ist.

9. Filterelement nach Anspruch 8, **dadurch gekennzeichnet,**
**dass** die Innenzargenhälften (30,31) durch ein Filmscharnier (33) um eine parallel zur Längsmittelachse (42) verlaufende Schwenkachse (34) schwenkbar miteinander verbunden sind.

10. Filterelement nach Anspruch 8 oder 9, **dadurch gekennzeichnet,**
**dass** die eine Innenzargenhälfte (30) integral mit dem Ausrichtsteg (16) und/oder mit dem Teil (25) der ersten Endscheibe (12) spritzgeformt ist, während die andere Innenzargenhälfte (31) integral mit der Lochscheibe (24) spritzgeformt ist.

11. Filterelement nach einem der Ansprüche 1 bis 10, **dadurch gekennzeichnet,**
- **dass** die jeweilige Endscheibe (11, 12) einen den Filterkörper (10) axial verschließenden Ringbereich (38, 40) und einen vom Ringbereich (38, 40) umschlossenen, geschlossenen oder offenen zentralen Kernbereich (39, 41) aufweist,
- **dass** der Kernbereich (39, 41) durch den der Endscheibe (11, 12) zugeordneten Teil (25, 27) der Innenzarge (15) gebildet ist,
- **dass** der Ringbereich (38, 40) an den Kernbereich (39, 41) angespritzt oder angeschäumt ist.

12. Filterelement nach Anspruch 11, **dadurch gekennzeichnet,**
- **dass** bei der Endscheibe (11) deren offener zentraler Kernbereich (41) die Strömungstulpe (28) bildet oder aufweist, der Ringbereich (40) eine radial wirkende Dichtkontur (54) aufweist, in die ein Anschlussstutzen (50) auf axialem Stoß mit der Strömungstulpe (28) axial einsteckbar ist, wobei die Dichtkontur (54) die Strömungstulpe (28) axial überlappt und im Einbauzustand radial am Anschlussstutzen (50) anliegt.

13. Filtereinrichtung zum Filtern eines Fluids,
- mit einem Filtergehäuse (7),
- mit einem Filterelement (6) nach einem der Ansprüche 1 bis 12, das im Filtergehäuse (7) eine Rohseite (8) von einer Reinseite (9) trennt,
- wobei das Filtergehäuse (7) wenigstens ein radial wirkendes Gegenausrichtelement (22) aufweist, das beim Einsetzen des Filterelements (6) mit dem wenigstens einen Ausrichtelement (21) zum Ausrichten des Filterelements (6) in eine vorbestimmte Drehlage zusammenwirkt.

14. Frischluftanlage einer Brennkraftmaschine, insbesondere eines Kraftfahrzeugs,
- mit einer Filtereinrichtung (2) nach Anspruch 13
- mit einem Luftmassenmesser (3), der in einem Luftströmungspfad (5) stromab des Filterelements (6) angeordnet ist.

## Claims

1. A filter element for a filter device (2) for filtering a fluid,
- having an annular filter body (10) consisting of a web-like, folded filter material (13), which encloses an inner space (14) in the circumferential direction,
- having a first end disc (12) and a second end disc (11) which axially delimit the filter body (10),
- having an inner frame (15), which is arranged on an inner side of the filter body (10) facing the inner space (14),
- wherein the inner frame (15) has at least one radially outwardly projecting, axially extending alignment strip (16),
- wherein the alignment strip (16) is arranged between and bears against two folds (18) of the filter material (13), said folds being adjacent in the circumferential direction,
**characterised in**
- **that** the inner frame (15) has a flow sleeve (28) or is formed as a flow sleeve (28), wherein the flow sleeve (28) is formed as an inflow sleeve or as an outflow sleeve,
- **that** the inner frame (15) has at least a portion (27) of the second end disc (11) which has the flow sleeve (28) or is formed as the flow sleeve (28),
- **that** the inner frame (15) is injection-moulded integrally with the alignment strip (16), with the portion of the second end disc (11), and with the flow sleeve (28),
- **that** end folds (18) of the filter material (13) are attached to the alignment strip (16),
- **that** the alignment strip (16) with the end folds (18) fixed thereto form an alignment element (21) for aligning a rotary position of the filter element (6) in the filter housing.

2. The filter element according to claim 1,
**characterized in**
**that** the flow sleeve (28) forms a transition between a circular cross section and an oval cross section.

3. The filter element according to Claim 1 or 2,
**characterised in**
**that** the filter body (10) has an elliptical cross section, while the flow sleeve (28) has a circular cross section axially on the outside.

4. The filter element according to one of Claims 1 to 3,
**characterised in**
**that** the inner frame (15) has at least a portion (25) of the first end disc (12) which axially delimits the filter body (10).

5. The filter element according to one of Claims 1 to 4,
**characterised in**
**that** the inner frame (15) has at least one axially extending supporting strip (29), which axially supports the first end disc (12) on the second end disc (11).

6. The filter element according to one of Claims 1 to 5,
**characterised in**
**that** the inner frame (15) has at least one perforated disc (24), which extends perpendicularly to the longitudinal centre axis (42) of the filter element (6).

7. The filter element according to one of Claims 1 to 6,
**characterised in**
**that** the inner frame (15) additionally is injection-moulded integrally with the portion (25) of the first end disc (12) and/or with the perforated disc (24) and/or with the at least one supporting strip (29).

8. The filter element according to one of Claims 1 to 7,
**characterised in**
**that** the inner frame (15) is divided into two inner frame halves (30, 31) in an axial plane (32) containing the longitudinal centre axis (42).

9. The filter element according to Claim 8,
**characterised in**
**that** the inner frame halves (30, 31) are connected to each other such that they can pivot about a pivot axis (34) running parallel to the longitudinal centre axis (42) by means of a living hinge (33).

10. The filter element according to Claim 8 or 9,
**characterised in**
**that** one inner frame half (30) is injection-moulded integrally with the alignment strip (16) and/or with the portion (25) of the first end disc (12), while the other inner frame half (31) is injection-moulded integrally with the perforated disc (24).

11. The filter element according to one of Claims 1 to 10,
**characterised in**
- **that** the respective end disc (11, 12) has an annular region (38, 40), which axially closes the filter body (10), and a closed or open central core region (39, 41), which is surrounded by the annular region (38, 40),
- **that** the core region (39, 41) is formed by the part (25, 27) of the inner frame (15) associated with the end disc (11, 12),
- **that** the annular region (38, 40) is moulded or foamed onto the core region (39, 41).

12. The filter element according to Claim 11,
**characterised in**
- **that** in the end disc (11) whose open central core region (41) forms or has the flow sleeve (28), the annular region (40) has a radially effective sealing contour (54), into which a connection piece (50) can be inserted axially until it axially abuts the flow sleeve (28), wherein the sealing contour (54) axially overlaps the flow sleeve (28) and bears radially against the connection piece (50) when installed.

13. A filter device for filtering a fluid,
- having a filter housing (7),
- having a filter element (6) according to one of Claims 1 to 12, which separates an untreated side (8) from a clean side (9) in the filter housing (7),
- wherein the filter housing (7) has at least one counter-alignment element (22), which interacts with the at least one alignment element (21) when the filter element (6) is inserted in order to align the filter element (6) into a predefined rotary position.

14. A fresh air system of an internal combustion engine, in particular of a motor vehicle,
- having a filter device (2) according to Claim 13,
- having an air flow meter (3), which is arranged in an air flow path (5) downstream of the filter element (6).

## Revendications

1. Elément de filtre pour un dispositif de filtre (2) servant à filtrer un fluide,
- avec un corps de filtre (10) de forme annulaire composé d'un matériau de filtration (13) plié en forme de bande, qui entoure un espace intérieur (14) dans la direction périphérique,
- avec une première rondelle d'extrémité (12) et avec une seconde rondelle d'extrémité (11), qui délimitent de manière axiale le corps de filtre (10),
- avec un cadre intérieur (15), qui est disposé au niveau d'un côté intérieur, tourné vers l'espace intérieur (14), du corps de filtre (10),
- dans lequel le cadre intérieur (15) présente au moins une traverse d'alignement (16) dépassant radialement vers l'extérieur, s'étendant de manière axiale,
- dans lequel la traverse d'alignement (16) est disposée, dans la direction périphérique, entre deux plis (18) adjacents du matériau de filtration (13) et repose au niveau de ceux-ci,
**caractérisé en ce**
- **que** le cadre intérieur (15) présente une manchette d'écoulement (28) ou est configuré en tant que manchette d'écoulement (28), dans lequel la manchette d'écoulement (28) est configurée en tant que manchette de flux entrant ou en tant que manchette de flux sortant,
- **que** le cadre intérieur (15) présente au moins une partie (27) de la seconde rondelle d'extrémité (11), qui présente la manchette d'écoulement (28) ou est configurée en tant que manchette d'écoulement (28),
- **que** le cadre intérieur (15) est moulé par injection d'un seul tenant avec la traverse d'alignement (16), avec la partie (27) de la seconde rondelle d'extrémité (11) et avec la manchette d'écoulement (28),
- **que** des plis d'extrémité (18) du matériau de filtration (13) sont fixés à la traverse d'alignement (16),
- **que** la traverse d'alignement (16) forme, avec les plis d'extrémité (18) fixés à celle-ci, un élément d'alignement (21) afin d'aligner la position de rotation de l'élément de filtre (6) dans le boîtier de filtre.

2. Elément de filtre selon la revendication 1,
**caractérisé en ce**
**que** la manchette d'écoulement (28) forme une transition entre une section transversale de forme circulaire et une section transversale de forme ovale.

3. Elément de filtre selon la revendication 1 ou 2,
**caractérisé en ce**
**que** le corps de filtre (10) possède une section transversale elliptique tandis que la manchette d'écoulement (28) présente axialement à l'extérieur une section transversale de forme circulaire.

4. Elément de filtre selon l'une quelconque des revendications 1 à 3,
**caractérisé en ce**
**que** le cadre intérieur (15) présente au moins une partie (25) de la première rondelle d'extrémité (12) délimitant axialement le corps de filtre (10).

5. Elément de filtre selon l'une quelconque des revendications 1 à 4,
**caractérisé en ce**
**que** le cadre intérieur (15) présente au moins une traverse d'appui (29) s'étendant axialement, qui soutient de manière axiale la première rondelle d'extrémité (12) au niveau de la seconde rondelle d'extrémité (11).

6. Elément de filtre selon l'une quelconque des revendications 1 à 5,
**caractérisé en ce**
**que** le cadre intérieur (15) présente au moins une rondelle perforée (24), qui s'étend de manière perpendiculaire par rapport à l'axe central longitudinal (42) de l'élément de filtre (6).

7. Elément de filtre selon l'une quelconque des revendications 1 à 6,
**caractérisé en ce**
**que** le cadre intérieur (15) est moulé par injection par ailleurs d'un seul tenant avec la partie (25) de la première rondelle d'extrémité (12) et/ou avec la rondelle perforée (24) et/ou avec l'au moins une traverse d'appui (29).

8. Elément de filtre selon l'une quelconque des revendications 1 à 7,
**caractérisé en ce**
**que** le cadre intérieur (15) est divisé en deux moitiés de cadre intérieur (30, 31) dans un plan axial (32) contenant l'axe central longitudinal (42).

9. Elément de filtre selon la revendication 8,
**caractérisé en ce**
**que** les moitiés de cadre intérieur (30, 31) sont reliées l'une à l'autre par une charnière à film (33) de manière à pouvoir pivoter autour d'un axe de pivotement (34) s'étendant de manière parallèle par rapport à l'axe central longitudinal (42).

10. Elément de filtre selon la revendication 8 ou 9,
**caractérisé en ce**
**que** l'une moitié de cadre intérieur (30) est moulée par injection d'un seul tenant avec la traverse d'alignement (16) et/ou avec la partie (25) de la première rondelle d'extrémité (12), tandis que l'autre moitié de cadre intérieur (31) est moulée par injection d'un seul tenant avec la rondelle perforée (24).

11. Elément de filtre selon l'une quelconque des revendications 1 à 10,
**caractérisé en ce**
- **que** la rondelle d'extrémité (11, 12) respective présente une zone annulaire (38, 40) fermant de manière axiale le corps de filtre (10) et une zone de noyau (39, 41) centrale fermée ou ouverte entourée par la zone annulaire (38, 40),
- **que** la zone de noyau (39, 41) est formée par la partie (25, 27), associée à la rondelle d'extrémité (11, 12), du cadre intérieur (15),
- **que** la zone annulaire (38, 40) est appliquée par injection ou par expansion au niveau de la zone de noyau (39, 41).

12. Elément de filtre selon la revendication 11,
**caractérisé en ce**
- **que** pour la rondelle d'extrémité (11), sa zone de noyau (41) centrale ouverte forme ou présente la manchette d'écoulement (28), la zone annulaire (40) présente un contour étanche (54) agissant radialement, dans lequel une tubulure de raccordement (50) peut être enfichée de manière axiale sur un coup axial avec la manchette d'écoulement (28), dans lequel le contour étanche (54) chevauche de manière axiale la manchette d'écoulement (28) et repose radialement au niveau de la tubulure de raccordement (50) dans l'état monté.

13. Dispositif de filtre servant à filtrer un fluide,
- avec un boîtier de filtre (7),
- avec un élément de filtre (6) selon l'une quelconque des revendications 1 à 12, qui sépare, dans le boîtier de filtre (7), un côté produit brut (8) d'un côté produit pur (9),
- dans lequel le boîtier de filtre (7) présente au moins un élément d'alignement complémentaire (22) agissant radialement, qui coopère, lors de l'insertion de l'élément de filtre (6), avec l'au moins un élément d'alignement (21) servant à aligner l'élément de filtre (6) dans une position de rotation prédéfinie.

14. Installation d'air frais avec un moteur à combustion interne, en particulier d'un véhicule automobile,
- avec un dispositif de filtre (2) selon la revendication 13,
- avec un système de mesure de masses d'air (3), qui est disposé dans une voie d'écoulement d'air (5) en aval de l'élément de filtre (6).
